(19) Europäisches Patentamt / European Patent Office / Office européen des brevets

(11) **EP 4 664 560 A1**

(12) **EUROPEAN PATENT APPLICATION**
published in accordance with Art. 153(4) EPC

(43) Date of publication:
**17.12.2025 Bulletin 2025/51**

(21) Application number: **24753351.6**

(22) Date of filing: **06.02.2024**

(51) International Patent Classification (IPC):
*H01M 4/58* (2010.01)        *H01B 1/06* (2006.01)
*H01B 1/10* (2006.01)        *H01M 4/136* (2010.01)
*H01M 4/36* (2006.01)        *H01M 4/62* (2006.01)
*H01M 6/18* (2006.01)        *H01M 10/052* (2010.01)
*H01M 10/0562* (2010.01)

(52) Cooperative Patent Classification (CPC):
**H01B 1/06; H01B 1/10; H01M 4/136; H01M 4/36;
H01M 4/58; H01M 4/62; H01M 6/18; H01M 10/052;
H01M 10/0562;** Y02E 60/10

(86) International application number:
**PCT/JP2024/003905**

(87) International publication number:
**WO 2024/166908 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2023 JP 2023016489**

(71) Applicant: **Mitsui Mining & Smelting Co., Ltd.
Shinagawa-ku
Tokyo 141-8584 (JP)**

(72) Inventor: **MIYASHITA, Norihiko
Ageo-shi, Saitama 362-0021 (JP)**

(74) Representative: **Novagraaf Technologies
Bâtiment O2
2, rue Sarah Bernhardt
CS90017
92665 Asnières-sur-Seine Cedex (FR)**

(54) **ACTIVE MATERIAL, SOLID ELECTROLYTE, ELECTRODE MIXTURE, AND BATTERY**

(57)    To provide an active material and a solid electrolyte capable of improving the performance of lithium sulfur batteries. An active material comprising: a compound; and an electroconductive material, wherein the compound contains a lithium (Li) element, a sulfur (S) element, a phosphorus (P) element, an iron (Fe) element, and a halogen (X) element, the compound has a peak at positions $2\theta = 27.1° \pm 0.5°$ and $31.4° \pm 0.5°$ in an X-ray diffraction pattern measured with an X-ray diffractometer using Cu K$\alpha$1 radiation, and the active material satisfies relationship (1), (2), (3) and (4) shown below: (1) $5.8 \leq$ Li/(Fe+P)$\leq 10.0$, (2) $0.1 \leq$ X/(Fe+P)$\leq 1.4$, (3) $0.2 \leq$ X+Fe $\leq 2.0$, (4) $0.0 <$ Fe/(Fe+P) $< 1.0$, wherein (1) defines a molar ratio of the lithium (Li) element to a sum of the iron (Fe) element and the phosphorus (P) element, (2) defines a molar ratio of the halogen (X) element to the sum of the iron (Fe) element and the phosphorus (P) element, (3) defines a sum of mole numbers of the halogen (X) element and the iron (Fe) element, and (4) defines a molar ratio of the iron (Fe) element to the sum of the iron (Fe) element and the phosphorus (P) element.

Fig. 1

Example 1

## Description

### Technical Field

The present invention relates to an active material and a solid electrolyte. The present invention also relates to an electrode mixture including the active material, and a battery including the active material and a solid electrolyte.

### Background Art

Applicant has previously proposed a method for producing an active material, involving mixing, with an electroconductive material, a sulfide containing lithium, sulfur and phosphorus elements, etc., and including a crystal phase having an argyrodite-type crystal structure, to composite these materials (see Patent Literature 1). The active material produced according to this production method can improve the performance of lithium-ion batteries beyond conventional levels. The active material also has economic advantages, because it does not require the use of rare metals such as cobalt.

### Citation List

Patent Literature

Patent Literature 1: WO 2022/045302

### Summary of Invention

The present Inventor has conducted further studies to improve the performance of lithium-ion batteries. As a result, Inventor has found that there are still demands for active materials and solid electrolytes capable of further improving the performance of lithium-ion batteries.
An objective of the present invention is to provide an active material and a solid electrolyte capable of improving the performance of lithium-ion batteries.
The present Inventor has found that battery performance, such as capacity and rate properties, can be improved beyond conventional levels by controlling the blending amount of a specific element, or iron (Fe) element in particular, that is blended in the sulfide used in the active material proposed in the aforementioned Patent Literature 1, and compositing the thus-obtained sulfide and an electroconductive material for use as an active material, or alternatively, using the sulfide as a solid electrolyte.
The present invention is based on the aforementioned finding, and provides an active material comprising:

a compound; and
an electroconductive material, wherein

the compound contains a lithium (Li) element, a sulfur (S) element, a phosphorus (P) element, an iron (Fe) element, and a halogen (X) element,
the compound has a peak at positions $2\theta = 27.1° \pm 0.5°$ and $31.4° \pm 0.5°$ in an X-ray diffraction pattern measured with an X-ray diffractometer using Cu $K\alpha1$ radiation, and
the active material satisfies relationships (1), (2), (3) and (4) shown below:

$$(1)\ 5.8 \le Li/(Fe+P) \le 10.0$$

$$(2)\ 0.1 \le X/(Fe+P) \le 1.4$$

$$(3)\ 0.2 \le X+Fe \le 2.0$$

$$(4)\ 0.0 < Fe/(Fe+P) < 1.0$$

wherein

(1) defines a molar ratio of the lithium (Li) element to a sum of the iron (Fe) element and the phosphorus (P) element,

(2) defines a molar ratio of the halogen (X) element to the sum of the iron (Fe) element and the phosphorus (P) element,

(3) defines a sum of mole numbers of the halogen (X) element and the iron (Fe) element, and

(4) defines a molar ratio of the iron (Fe) element to the sum of the iron (Fe) element and the phosphorus (P) element.

The present invention also provides a solid electrolyte comprising:

a compound containing a lithium (Li) element, a sulfur (S) element, a phosphorus (P) element, an iron (Fe) element, and a halogen (X) element, wherein
the solid electrolyte satisfies relationships (1), (2), (3) and (4) shown below:

$$(1)\ 5.8 \leq Li/(Fe+P) \leq 10.0$$

$$(2)\ 0.1 \leq X/(Fe+P) \leq 1.4$$

$$(3)\ 0.2 \leq X+Fe \leq 2.0$$

$$(4)\ 0.0 < Fe/(Fe+P) < 1.0$$

wherein

(1) defines a molar ratio of the lithium (Li) element to a sum of the iron (Fe) element and the phosphorus (P) element,

(2) defines a molar ratio of the halogen (X) element to the sum of the iron (Fe) element and the phosphorus (P) element,

(3) defines a sum of mole numbers of the halogen (X) element and the iron (Fe) element, and

(4) defines a molar ratio of the iron (Fe) element to the sum of the iron (Fe) element and the phosphorus (P) element.

**Brief Description of Drawings**

[Fig. 1] Fig. 1 is an X-ray diffraction pattern of an active material and a solid electrolyte produced in Example 1.

[Fig. 2] Fig. 2 is an X-ray diffraction pattern of an active material and a solid electrolyte produced in Example 2.

[Fig. 3] Fig. 3 is an X-ray diffraction pattern of an active material and a solid electrolyte produced in Example 3.

[Fig. 4] Fig. 4 is an X-ray diffraction pattern of an active material and a solid electrolyte produced in Example 4.

[Fig. 5] Fig. 5 is an X-ray diffraction pattern of an active material and a solid electrolyte produced in Example 5.

[Fig. 6] Fig. 6 is an X-ray diffraction pattern of an active material and a solid electrolyte produced in Comparative Example 1.

[Fig. 7] Fig. 7 is an X-ray diffraction pattern of an active material and a solid electrolyte produced in Comparative Example 2.

[Fig. 8] Fig. 8 is an X-ray diffraction pattern of an active material and a solid electrolyte produced in Comparative Example 3.

[Fig. 9] Fig. 9 is an X-ray diffraction pattern of an active material and a solid electrolyte produced in Comparative Example 4.

[Fig. 10] Fig. 10 is an X-ray diffraction pattern of an active material and a solid electrolyte produced in Comparative Example 5.

[Fig. 11] Fig. 11 is a charge-discharge curve of a battery using the active material produced in Example 1 as a positive electrode active material.

[Fig. 12] Fig. 12 is a charge-discharge curve of a battery using the active material produced in Example 5 as a positive electrode active material.

[Fig. 13] Fig. 13 is a charge-discharge curve of a battery using the active material produced in Comparative Example 2 as a positive electrode active material.

[Fig. 14] Fig. 14 is a charge-discharge curve of a battery using the active material produced in Comparative Example 4 as a positive electrode active material.

**Description of Embodiments**

The present invention will be described below according to preferred embodiments thereof. An active material of the present invention contains particles of a specific compound and particles of an electroconductive material. Preferably, an active material of the present invention contains: particles of a specific compound; and particles which are dispersed on the surface and/or in the interior of the compound particles and which are constituted by an electroconductive material for imparting electron conduction properties to the compound. A battery including the active material of the present invention having the aforementioned structure has a high initial discharge capacity and can maintain a high capacity even when discharged at a high rate.

From the viewpoint of further enhancing the aforementioned advantages, it is preferable that the compound and the electroconductive material are composited. Examples of a "composited" state may include a state in which the electroconductive material particles are inseparably dispersed on the surface and/or in the interior of the compound particles, and a state in which the compound particles and the electroconductive material particles have bonded through a chemical reaction. Particularly, it is preferable that the compound and the electroconductive material are inseparably composited.

The expression "inseparably dispersed" means that, for example, when the active material of the present invention is observed with an energy-dispersive X-ray spectrometer-equipped scanning electron microscope (SEM-EDS) and the constituent elements of the compound (e.g., sulfur element) and the constituent elements of the electroconductive material are mapped, it is possible to verify that the constituent elements of the compound (e.g., sulfur element) and the constituent elements of the electroconductive material are present in an overlapping state. Alternatively, this may mean that, when a cross-section of an electrode of a battery produced by using the active material of the present invention is observed, it is possible to verify that the constituent elements of the compound (e.g., sulfur element) and the constituent elements of the electroconductive material are present in an overlapping state on the surface or in the interior of the active material.

The fact that "the compound and the electroconductive material have composited" can be verified, for example, through the presence/absence of C-S bonds by Raman spectroscopy or photoelectron spectroscopy, in cases where the electroconductive material is a carbon material.

With the active material of the present invention, electrons can be smoothly transferred between the active material's exterior and the compound via the electroconductive material, making it possible to acquire electrical conductivity and also acquire lithium-ion storage/release functions. As will be described in particular below, in cases where the compound has a specific composition, a battery including the active material of the present invention will acquire a high initial discharge capacity and can also maintain a high capacity even when discharged at a high rate. From this viewpoint, the active material of the present invention is useful as a positive electrode active material for lithium-ion batteries. In contrast, conventionally known sulfur-based positive electrode active materials, such as elemental sulfur, lithium sulfide ($Li_2S$), composite materials thereof, and metal sulfides, exhibit little or no electrical conductivity, and thus, a desired battery performance cannot be attained even when such materials are used as an active material.

The compound is constituted by including a lithium (Li) element, a sulfur (S) element, a phosphorus (P) element, an iron (Fe) element, and a halogen (X) element. Hereinbelow, this compound may be referred to as "iron-containing compound" for convenience's sake.

The X element is at least one element selected from a fluorine (F) element, a chlorine (Cl) element, a bromine (Br) element, and an iodine (I) element. Among these halogen elements, it is preferable to use at least one selected from Cl and Br from the viewpoint of increasing the initial discharge capacity of a battery including the active material of the present invention and maintaining a high capacity even when the battery is discharged at a high rate.

The constituent elements of the iron-containing compound satisfy specific relationships. More specifically, the iron-containing compound satisfies the following relationship (1):

$$5.8 \leq Li/(Fe+P) \leq 10.0 \quad (1)$$

wherein (1) defines a molar ratio of the lithium (Li) element to a sum of the iron (Fe) element and the phosphorus (P) element.

When the iron-containing compound satisfies the relationship (1), a battery including the active material of the present invention will have a high initial discharge capacity and can also maintain a high capacity even when discharged at a high rate. From this viewpoint, it is preferable that the relationship (1) satisfies the following relationship (1'), and more preferably satisfies the following relationship (1"):

$$6.3 \leq Li/(Fe+P) \leq 9.0 \quad (1')$$

$$7.8 \leq Li/(Fe+P) \leq 8.5 \quad (1'')$$

The iron-containing compound satisfies the following relationship (2):

$$0.1 \leq X/(Fe+P) \leq 1.4 \quad (2)$$

wherein, (2) defines a molar ratio of the halogen (X) element to the sum of the iron (Fe) element and the phosphorus (P) element, which are constituent elements.

When the iron-containing compound satisfies the relationship (2), a battery including the active material of the present invention will have a high initial discharge capacity and can also maintain a high capacity even when discharged at a high rate. From this viewpoint, it is preferable that the relationship (2) satisfies the following relationship (2'), and more preferably satisfies the following relationship (2"):

$$0.2 \leq X/(Fe+P) \leq 1.0 \quad (2')$$

$$0.2 \leq X/(Fe+P) \leq 0.8 \quad (2'')$$

Further, in the iron-containing compound, the constituent elements satisfy the following relationship (3):

$$0.2 \leq X+Fe \leq 2.0 \quad (3)$$

wherein, (3) defines a sum of mole numbers of the halogen (X) element and the iron (Fe) element, which are constituent elements

When the iron-containing compound satisfies the relationship (3), a battery including the active material of the present invention will have a high initial discharge capacity and can also maintain a high capacity even when discharged at a high rate. From this viewpoint, it is preferable that the relationship (3) satisfies the following relationship (3'), and more preferably satisfies the following relationship (3"):

$$0.4 \leq X+Fe \leq 1.5 \quad (3')$$

$$0.6 \leq X+Fe \leq 1.0 \quad (3'')$$

Further, the iron-containing compound satisfies the following relationship (4):

$$0.0 < Fe/(Fe+P) < 1.0 \quad (4)$$

wherein (4) defines a molar ratio of the iron (Fe) element to the sum of the iron (Fe) element and the phosphorus (P) element, which are constituent elements.

When the iron-containing compound satisfies the relationship (4), a battery including the active material of the present invention will have a high initial discharge capacity and can also maintain a high capacity even when discharged at a high rate. From this viewpoint, it is preferable that the relationship (4) satisfies the following relationship (4'), and more preferably satisfies the following relationship (4"):

$$0.1 < Fe/(Fe+P) < 0.8 \quad (4')$$

$$0.2 < Fe/(Fe+P) < 0.6 \quad (4'')$$

Using a compound represented particularly by the following compositional formula (A) as the iron-containing compound satisfying the aforementioned relationships is preferable from the viewpoint that the properties as an active material can be further improved.

$$Li_a Fe_d P_e M_{1-d-e} S_b X_c \quad (A)$$

In the formula, M is at least one element selected from germanium (Ge) element, antimony (Sb) element, silicon (Si) element, tin (Sn) element, aluminum (Al) element, titanium (Ti) element, nickel (Ni) element, cobalt (Co) element, and manganese (Mn) element.

From the viewpoint of further increasing the initial discharge capacity of a battery and further maintaining a high capacity even when discharged at a high rate, it is preferable that, in the compositional formula (A), a is preferably from 5.8 to 10.0, more preferably from 6.5 to 9.5, even more preferably from 7.0 to 9.0.

From the same viewpoint, it is preferable that, in the compositional formula (A), b is preferably from 3.5 to 6.0, more preferably from 4.5 to 5.9, even more preferably from 5.0 to 5.8.

From the same viewpoint, it is preferable that, in the compositional formula (A), c is preferably from 0.1 to 1.4, more preferably from 0.2 to 1.0, even more preferably from 0.4 to 0.8.

From the same viewpoint, it is preferable that, in the compositional formula (A), e is preferably greater than 0 and less than 1, more preferably from 0.7 to 0.9, even more preferably from 0.6 to 0.9, on condition that d+e is 1 or less, and more preferably d+e is 1. It is preferable that, in the compositional formula (A), d is preferably 1-e.

Particularly, it is preferable that the M in the compositional formula (A) is at least one selected from Ge, Sb, Sn, and Si, from the viewpoint that a high capacity can be further maintained, even when discharged at a high rate.

Among the iron-containing compounds represented by the aforementioned compositional formula (A), it is preferable to use a compound represented by the following compositional formula (B), because it is possible to obtain an active material capable of further maintaining a high capacity, even when discharged at a high rate.

$$Li_{7-y+3x}Fe_xP_{1-x}S_{6-y}X_y \qquad (B)$$

In the formula, x is preferably a number greater than 0 and less than 1, more preferably from 0.1 to 0.8, even more preferably from 0.1 to 0.6, even more preferably from 0.2 to 0.6.

Further, y is preferably from 0 to 1.4, more preferably from 0.2 to 1.2, even more preferably from 0.2 to 1.0, even more preferably from 0.2 to 0.8.

The composition of the elements included in the iron-containing compound can be measured, for example, by ICP optical emission spectrometry.

WO 2022/045302, which is Patent Literature 1 previously described in the Background Art, discloses an active material obtained by mixing, with an electroconductive material, a sulfide containing Li, S and P elements, etc., and including a crystal phase having an argyrodite-type crystal structure, to thereby composite these materials. In this active material, it is difficult to sufficiently bring the electroconductive material into contact with the entire sulfide, resulting in a possibility that the electroconductive material may not be able to sufficiently form a conductive path over the entire sulfide. In contrast, the iron-containing compound used in the present invention contains Fe, which imparts electrical conductivity to the entire iron-containing compound. The present Inventor considers that, due to the above, compositing the iron-containing compound with an electroconductive material can sufficiently achieve electrical conductivity. As a result, a battery including the active material of the present invention will have a high initial discharge capacity and can also maintain a high capacity even when discharged at a high rate.

In addition to including the elements described above, it is preferable that the iron-containing compound includes a crystal phase having an argyrodite-type crystal structure. In this way, the properties of the active material of the present invention are further improved. Whether a crystal phase having an argyrodite-type crystal structure is included or not can be determined by analyzing the active material of the present invention by X-ray diffractometry. For the Cu K$\alpha$ radiation, for example, Cu K$\alpha$1 radiation can be used.

It is preferable that the iron-containing compound has a diffraction peak at positions $2\theta$ = 25.19° ± 1.00° and 29.62° ± 1.00° in an X-ray diffraction pattern measured using Cu K$\alpha$1 radiation. These peaks are ascribable to the argyrodite-type crystal phase.

It is preferable that, in addition to the positions of $2\theta$ = 25.19° ± 1.00° and 29.62° ± 1.00°, the iron-containing compound has a diffraction peak at one or more positions selected from 2$\theta$ = 15.34° ± 1.00°, 17.74° ± 1.00°, 30.97° ± 1.00°, 44.37° ± 1.00°, 47.22° ± 1.00°, and 51.70° ± 1.00°, in an X-ray diffraction pattern measured using Cu K$\alpha$1 radiation, and more preferably at all of the positions of $2\theta$ = 15.34° ± 1.00°, 17.74° ± 1.00°, 30.97° ± 1.00°, 44.37° ± 1.00°, 47.22° ± 1.00°, and 51.70° ± 1.00°, in addition to the positions of $2\theta$ = 25.19° ± 1.00° and 29.62° ± 1.00°. These diffraction peaks are ascribable to the argyrodite-type crystal phase.

Although the positions of the aforementioned diffraction peaks are described as the median value ± 1.00°, the positions of the diffraction peaks are preferably the median value ± 0.500°, more preferably the median value ± 0.300°.

It should be noted that the aforementioned diffraction peaks are observed in cases where the iron-containing compound is measured alone before compositing the iron-containing compound with an electroconductive material, but are not observed in the active material of the present invention, or in some cases, are only slightly observed. The present Inventor considers that the reason therefor is because compositing of the iron-containing compound with an electroconductive material causes a change in the crystal structure of the iron-containing compound.

The iron-containing compound may contain other materials or other components as necessary. Therefore, the iron-containing compound may consist of a single phase constituted by a crystal phase having an argyrodite-type crystal structure, or may include other phases in addition to this phase. For example, in addition to a crystal phase having an argyrodite-type crystal structure, the compound may include a $Li_2S$ phase, $Li_3PS_4$ phase, $Li_4P_2S_6$ phase, $Li_2FeS_2$ phase, FeS phase, LiCl phase, LiBr phase, etc. Particularly, it is preferable that the iron-containing compound includes a $Li_2S$ phase in addition to a crystal phase having an argyrodite-type crystal structure, because the capacity of the active material of the present invention is increased.

Particularly, it is preferable that the iron-containing compound, before being composited with an electroconductive material, contains Li, S, P, Fe, and X elements, and includes a crystal phase having an argyrodite-type crystal structure. Further, aside from the aforementioned other materials and other components, the iron-containing compound may include impurities in an amount that has minimal adverse influence on the effects of the present invention, such as less than 5 mass%, and more preferably less than around 3 mass%.

In the iron-containing compound, it is preferable that the content of the Li element in the iron-containing compound is, for example, preferably 10 mass% or greater, more preferably 12 mass% or greater, even more preferably 15 mass% or greater. On the other hand, the content is, for example, preferably 25 mass% or less, more preferably 23 mass% or less, even more preferably 21 mass% or less. By setting the content of the Li element within this range, it is possible to further increase the capacity of batteries including the active material of the present invention.

As for the electroconductive material, materials having electron conduction properties can be used without particular limitation. Examples of the electroconductive material may include various metal materials and electroconductive non-metal materials. Either one of the metal material or electroconductive non-metal material may be used, or both may be used in combination. Examples of the metal materials may include various precious metal elements, such as gold (Au) element, silver (Ag) element, platinum (Pt) element, palladium (Pd) element, rhodium (Rh) element, iridium (Ir) element, ruthenium (Ru) element, and osmium (Os) element. Other examples may include various transition metal elements, such as copper (Cu) element, iron (Fe) element, and tin (Sn) element. One of the aforementioned metal element may be used singly, or two or more of the aforementioned metal elements may be used in combination.

As for the electroconductive non-metal materials, for example, carbon materials may be used. Examples thereof may include graphite, acetylene black, carbon black, carbon nanofibers, carbon nanotubes, nanographene, and fullerene nanowhiskers. One of the aforementioned carbon material may be used singly, or two or more of the aforementioned carbon materials may be used in combination.

The various electroconductive materials described above serve as an electron conduction path when lithium is stored/released into/from the iron-containing compound, and therefore, it is preferable that the electroconductive material is uniformly dispersed and is in tight contact on the surface and/or in the interior of the iron-containing compound.

From the viewpoint of uniformly dispersing the electroconductive material particles on the surface and/or in the interior of the iron-containing compound particles, it is preferable that the size of the electroconductive material is smaller than the size of the iron-containing compound. More specifically, when D1 is defined as the particle diameter of the iron-containing compound and D2 is defined as the particle diameter of the electroconductive material, it is preferable that the value of D1/D2 is, for example, preferably 2 or greater, more preferably 5 or greater, even more preferably 10 or greater. On the other hand, the value of D1/D2 is, for example, preferably 1000 or less, more preferably 500 or less, even more preferably from 10 to 100.

The particle diameter D1 of the iron-containing compound is, for example, preferably 0.1 $\mu$m or greater, more preferably 0.2 $\mu$m or greater, even more preferably 0.5 $\mu$m or greater. On the other hand, D1 is, for example, preferably 20 $\mu$m or less, more preferably 10 $\mu$m or less, even more preferably 5 $\mu$m or less.

The particle diameter D2 of the electroconductive material is, for example, preferably 1 nm or greater, more preferably 10 nm or greater, even more preferably 20 nm or greater. On the other hand, D2 is, for example, preferably 500 nm or less, more preferably 300 nm or less, even more preferably 200 nm or less.

The "particle diameter of the iron-containing compound" refers to the cumulative volume particle diameter $D_{50}$ at a cumulative volume of 50 vol% as measured according to the laser diffraction/scattering particle size distribution measurement method (hereinafter, "$D_{50}$" refers to this particle diameter).

On the other hand, the "particle diameter of the electroconductive material" may be difficult to measure according to laser diffraction/scattering particle size distribution measurement in cases where the electroconductive material is dispersed in the interior of the particles of the iron-containing compound. In this case, the particle diameter is measured by directly observing the electroconductive material dispersed in the interior of the iron-containing compound by using a scanning electron microscope (SEM) or a transmission electron microscope (TEM). It should be noted that in cases where, for example, the electroconductive material has the shape of carbon nanotubes or carbon nanofibers as described above, the fiber diameter, i.e., the diameter of the fiber cross-section or the average value of the major axis and the minor axis, is measured as the particle diameter.

The active material of the present invention has diffraction peaks at specific angles when subjected to measurement with an X-ray diffractometer. More specifically, the active material has a diffraction peak at positions $2\theta = 27.1° \pm 0.5°$ and $31.4° \pm 0.5°$ in an X-ray diffraction pattern measured with an X-ray diffractometer using Cu K$\alpha$1 radiation. When the active material has such diffraction peaks, a battery including the active material of the present invention will have a high initial discharge capacity, and can also maintain a high capacity even when discharged at a high rate. In this case, typically, in the active material of the present invention, peaks ascribable to an argyrodite-type crystal phase are not observed at all, or are extremely weak even if observed. The diffraction peaks appearing at the aforementioned angles are surmised to be diffraction peaks ascribable to lithium sulfide.

It should be noted that, in the specification of the present application, the expression "there are no diffraction peaks ascribable to an argyrodite-type crystal phase" means that no diffraction peaks are observed when the active material is measured with an X-ray diffractometer using Cu K$\alpha$1 radiation as described above, but excludes cases where peaks of the argyrodite-type crystal phase are observed in terms of local structural observation according to other measurement methods, such as measurement by X-ray total scattering and pair distribution function (PDF) analysis.

In the active material of the present invention, the amount of the electroconductive material with respect to 100 parts by mass of the iron-containing compound is, for example, preferably 1 part by mass or greater, more preferably 2 parts by mass or greater, even more preferably 5 parts by mass or greater. On the other hand, the amount of the electroconductive material with respect to 100 parts by mass of the iron-containing compound is, for example, preferably 50 parts by mass or less, more preferably 20 parts by mass or less, even more preferably 10 parts by mass or less. When the iron-containing compound and the electroconductive material are present in this range, a battery including the active material of the present invention can maintain a high capacity even when discharged at a high rate.

The present invention also provides a solid electrolyte in addition to the aforementioned active material. The solid electrolyte of the present invention includes the iron-containing compound used for the aforementioned active material. Therefore, the solid electrolyte of the present invention is also referred to as "iron-containing solid electrolyte". Details on the iron-containing solid electrolyte are the same as the details on the iron-containing compound, so detailed description is omitted herefrom. An overview of the iron-containing solid electrolyte of the present invention is that: the iron-containing solid electrolyte includes the aforementioned iron-containing compound containing Li, S, P, Fe, and X elements, and the elements satisfy the relationships (1) to (4) regarding the aforementioned composition. The iron-containing solid electrolyte is provided with electron conduction properties, and therefore, by using the iron-containing solid electrolyte particularly in a positive electrode layer, the electron conduction properties of the entire positive electrode layer can be improved. As a result, a battery using the iron-containing solid electrolyte will have excellent battery performance, such as capacity and rate properties.

It should be noted that the iron-containing solid electrolyte of the present invention is not composited with an electroconductive material, and therefore, the appearance of the diffraction peaks observed in the active material of the present invention is not essential; however, their appearance, due to reasons such as the production method, is not excluded.

Next, a suitable method for producing the active material and the iron-containing solid electrolyte of the present invention will be described. The present production method is roughly divided mainly into two steps: a first step of preparing particles of the iron-containing compound; and a second step of mixing the iron-containing compound particles and particles of an electroconductive material to composite the two materials. Production of the iron-containing solid electrolyte involves only the first step, and does not involve the second step. These steps will be described below.

In the first step, particles of the iron-containing compound, which contains the aforementioned elements and includes a crystal phase having an argyrodite-type crystal structure, are prepared. The iron-containing compound can be produced according to known methods. In cases where this compound includes, for example, Li, P, S, Fe, Cl, and Br elements, the iron-containing compound particles can be obtained by mixing lithium sulfide ($Li_2S$) powder, phosphorus pentasulfide ($P_2S_5$) powder, ferrous sulfide (FeS) powder, lithium chloride (LiCl) powder, and lithium bromide (LiBr) powder, and firing the mixture. Preferable methods for mixing these powders may be to use, for example, a ball mill, a bead mill, a homogenizer, or the like.

After obtaining a mixed powder through mixing as described above, the mixed powder is dried as necessary. Next, the mixed powder is fired in an inert atmosphere or under circulation of hydrogen sulfide gas ($H_2S$), then ground/pulverized as necessary, and classified, to thereby obtain the iron-containing compound.

The firing temperature for firing in a hydrogen sulfide gas-containing atmosphere is, for example, preferably 350°C or higher, more preferably 450°C or higher. On the other hand, the firing temperature is, for example, preferably 650°C or lower, more preferably 600°C or lower, even more preferably 500°C or lower.

On the other hand, in cases where firing is performed in an inert atmosphere, such as in nitrogen gas or rare gas, the firing temperature is, for example, preferably 350°C or higher. On the other hand, the firing temperature is, for example, preferably 550°C or lower, more preferably 500°C or lower, even more preferably 450°C or lower.

The iron-containing compound particles can also be produced by amorphizing material powder using a mechanical milling method, and then heat-treating the amorphized material powder as necessary, to crystallize the same. In this case, there is no particular limitation to the processing device and processing conditions, as long as the material powder can be sufficiently mixed and amorphized. Particularly, using a planetary ball mill can amorphized the material powder efficiently and uniformly, because the container in which the material powder is charged undergoes self-rotation and revolution at high speed, and thus, high impact energy is generated between the material powder and the balls, which serve as grinding media, placed in the container together with the material powder. The mechanical milling method may be conducted under either dry or wet conditions.

The processing conditions for the mechanical milling method can be set as appropriate depending on the processing device to be used, and for example, by processing for 0.1 to 100 hours, the material powder can be amorphized even more efficiently and uniformly. The balls serving as grinding media are preferably made of $ZrO_2$, $Al_2O_3$, $Si_3N_4$ (silicon nitride), or WC (tungsten carbide), and the ball diameter is preferably around 0.2 to 10 mm.

The iron-containing compound can be obtained by subjecting the material powder amorphized by the mechanical milling process to a heat treatment according to the aforementioned firing conditions, to crystallize the same. The material powder subjected to the mechanical milling process will be in a more uniformly-mixed state, compared to a material powder obtained through an ordinary grinding/mixing process, thus making it possible to further lower the heat treatment temperature.

The iron-containing compound particles can also be produced through liquid-phase methods using organic solvents. In this case, a sulfide or a halide, serving as a raw material of the iron-containing compound, is dissolved in a solvent such as tetrahydrofuran or ethanol, and the iron-containing compound can be deposited by using the solvent as a reaction field. Alternatively, the iron-containing compound can be obtained by first synthesizing the iron-containing compound in advance using a different method, then dissolving it in a solvent such as ethanol, and re-depositing the same. With such liquid-phase methods, particles of the iron-containing compound can be produced in a shorter time and with less energy compared to other methods, and it is relatively easy to reduce the particle diameter of the particles.

Once the iron-containing compound particles have been obtained as described above, it is preferable to subject the particles to sizing to a suitable particle diameter. The preferable particle diameter of the iron-containing compound can be the same as that described above, so description is omitted herefrom.

Through the first step as described above, it is possible to obtain the iron-containing solid electrolyte of the present invention.

Next, to obtain the active material of the present invention, the second step is performed to mix and composite the iron-containing compound and an electroconductive material. Details on the electroconductive material to be used are as already described above, so description is omitted herefrom.

Compositing of the iron-containing compound and the electroconductive material is achieved, for example, by imparting mechanical energy to the iron-containing compound particles and the electroconductive material particles. For this purpose, it is preferable to apply compression/impact force or shearing/friction force to the iron-containing compound and the electroconductive material in a mixed state.

To perform compositing by imparting mechanical energy, such as compression/impact force or shearing/friction force, to the iron-containing compound and the electroconductive material in a mixed state, it is preferable to employ a device which is used mainly to subject powder to stirring, mixing, kneading, granulation, grinding, dispersion, surface modification, etc. For example, it is possible to use a planetary ball mill, a ball mill, a jet mill, a bead mill, an agitation pulverizer, a vibratory mill, a hammer mill, a roller mill, an atomizer, etc. The type of mechanical energy that can primarily be applied by using such devices differs depending on each device, and for example, in cases of using a planetary ball mill, primarily, compression/impact force can be applied to the compound and the electroconductive material in a mixed state, to composite these materials. The centrifugal acceleration obtained during device rotation is not particularly limited, so long as the compound and the electroconductive material can be composited, and may be, for example, preferably 10 G or greater, more preferably 15 G or greater, even more preferably 18 G or greater. Further, the centrifugal acceleration may be, for example, preferably 40 G or less, more preferably 30 G or less, even more preferably 25 G or less. When the centrifugal acceleration is within the aforementioned range, the effects of the present invention can be further enhanced.

Further, the aforementioned liquid-phase methods may be used for compositing the iron-containing compound and the electroconductive material. In this case, compositing can be achieved by first dispersing the electroconductive material in an organic solvent in advance, and then adding the iron-containing compound or a raw material for the iron-containing compound to the organic solvent, to cause the iron-containing compound to be deposited on the surface or in the interior of the electroconductive material. Compositing by this method can further reduce the particle diameter of the composited particles.

The active material of the present invention obtained according to any one of the various production methods described above can be made into an electrode mixture by being mixed with an electrolyte, an electroconductive material, a binder, etc. In cases where the active material of the present invention is used as a positive electrode active material, the electrode mixture will be a positive electrode mixture for forming a positive electrode layer.

The electrolyte may be a solid electrolyte. The solid electrolyte may be different from, or the same as, the iron-containing solid electrolyte of the present invention described above. In cases where the solid electrolyte is different from the iron-containing solid electrolyte, it is preferable that the solid electrolyte has ion conduction properties, such as lithium-ion conduction properties. Concrete examples may include inorganic solid electrolytes, such as sulfide solid electrolytes, oxide solid electrolytes, nitride solid electrolytes, halide solid electrolytes, etc., and organic polymer electrolytes, such as polymer electrolytes, etc. From the viewpoint of further enhancing the effects of the active material of the present invention, it is preferable that the solid electrolyte is a sulfide solid electrolyte. The sulfide solid electrolyte may be similar to sulfide solid electrolytes used for ordinary solid-state batteries. For example, the sulfide solid electrolyte may include Li and S elements and have lithium-ion conduction properties.

The sulfide solid electrolyte may be any one selected from crystalline materials, glass ceramics, and glass. The sulfide solid electrolyte may have an argyrodite-type crystal structure. Examples of the sulfide solid electrolyte may include compounds represented by $Li_2S-P_2S_5$, $Li_2S-P_2S_5-LiX$ ("X" represents at least one of halogen element), $Li_2S-P_2S_5-P_2O_5$, $Li_2S-Li_3PO_4-P_2S_5$, $Li_3PS_4$, $Li_4P_2S_6$, $Li_{10}GeP_2S_{12}$, $Li_{3.25}Ge_{0.25}P_{0.75}S_4$, $Li_7P_3S_{11}$, $Li_{3.25}P_{0.95}S_4$, $Li_aPS_bX_c$ ("X" represents at least one of halogen element; a represents a number from 3.0 to 9.0; b represents a number from 3.5 to 6.0; c represents a number from 0.1 to 3.0), etc. Other examples may include sulfide solid electrolytes disclosed in WO 2013/099834 and WO 2015/001818. The solid electrolyte of the present invention may be used as the sulfide solid electrolyte.

As for the active material, the electrode mixture may include only the active material of the present invention, or other active materials may be used in combination. Examples of other active materials may include known sulfur-containing active materials and elemental sulfur. The proportion of the active material of the present invention contained in the electrode mixture may be, for example, 20 mass% or greater, or 30 mass% or greater, or 40 mass% or greater. On the other hand, the proportion may be, for example, 70 mass% or less, or 60 mass% or less.

It is preferable that a battery of the present invention includes a positive electrode layer including a positive electrode active material, a negative electrode layer including a negative electrode active material, and a solid electrolyte layer disposed between the positive electrode layer and the negative electrode layer and including a solid electrolyte, wherein the positive electrode active material is preferably the aforementioned active material. It is also preferable that, in the battery of the present invention, the solid electrolyte layer contains the solid electrolyte of the present invention.

The battery of the present invention can be produced, for example, by stacking the three layers, i.e., the negative electrode layer, the solid electrolyte layer, and the positive electrode layer prepared as described above, and press-molding these layers.

It is preferable that the battery including the active material and/or solid electrolyte of the present invention is a lithium-ion battery. An example of such a battery may be a solid-state battery, particularly an all-solid-state battery, including a solid electrolyte layer. The battery of the present invention may be a primary battery or a secondary battery, preferably a secondary battery, and more preferably a lithium secondary battery. "Lithium secondary battery" broadly encompasses secondary batteries wherein charging/discharging is achieved by the transfer of lithium ions between the positive electrode and the negative electrode.

"Solid-state battery" may encompass solid-state batteries that do not include any liquid-state substance or gel-state substance as an electrolyte, and may also encompass structures that contain, for example, 50 mass% or less, or 30 mass% or less, or 10 mass% or less, of a liquid-state substance or gel-state substance as an electrolyte.

In relation to the foregoing embodiments, the present invention further discloses the following active materials and solid electrolytes.

{1} An active material comprising:

a compound; and
an electroconductive material, wherein

the compound contains a lithium (Li) element, a sulfur (S) element, a phosphorus (P) element, an iron (Fe) element, and a halogen (X) element,
the compound has a peak at positions $2\theta = 27.1° \pm 0.5°$ and $31.4° \pm 0.5°$ in an X-ray diffraction pattern measured with an X-ray diffractometer using Cu $K\alpha1$ radiation, and
the active material satisfies relationships (1), (2), (3) and (4) shown below:

$$(1)\ 5.8 \leq Li/(Fe+P) \leq 10.0$$

$$(2)\ 0.1 \leq X/(Fe+P) \leq 1.4$$

$$(3)\ 0.2 \leq X+Fe \leq 2.0$$

$$(4)\ 0.0 < Fe/(Fe+P) < 1.0$$

wherein

(1) defines a molar ratio of the lithium (Li) element to a sum of the iron (Fe) element and the phosphorus (P) element,
(2) defines a molar ratio of the halogen (X) element to the sum of the iron (Fe) element and the phosphorus (P) element,
(3) defines a sum of mole numbers of the halogen (X) element and the iron (Fe) element, and
(4) defines a molar ratio of the iron (Fe) element to the sum of the iron (Fe) element and the phosphorus (P) element.

{2} The active material as set forth in clause {1}, wherein the compound and the electroconductive material are composited.

{3} The active material as set forth in clause {1} or {2}, containing from 1 to 50 parts by mass of the electroconductive material with respect to 100 parts by mass of the compound.

{4} The active material as set forth in any one of clauses {1} to {3}, wherein the electroconductive material is at least one selected from carbon materials and metal materials.

{5} A solid electrolyte comprising:

a compound containing a lithium (Li) element, a sulfur (S) element, a phosphorus (P) element, an iron (Fe) element, and a halogen (X) element, wherein

the solid electrolyte satisfies relationships (1), (2), (3) and (4) shown below:

$$(1)\ 5.8 \leq Li/(Fe+P) \leq 10.0$$

$$(2)\ 0.1 \leq X/(Fe+P) \leq 1.4$$

$$(3)\ 0.2 \leq X+Fe \leq 2.0$$

$$(4)\ 0.0 < Fe/(Fe+P) < 1.0$$

wherein

(1) defines a molar ratio of the lithium (Li) element to a sum of the iron (Fe) element and the phosphorus (P) element,
(2) defines a molar ratio of the halogen (X) element to the sum of the iron (Fe) element and the phosphorus (P) element,
(3) defines a sum of mole numbers of the halogen (X) element and the iron (Fe) element, and
(4) defines a molar ratio of the iron (Fe) element to the sum of the iron (Fe) element and the phosphorus (P) element.

{6} The solid electrolyte as set forth in clause {5}, wherein the compound has a cumulative volume particle diameter $D_{50}$ at a cumulative volume of 50 vol% of from 0.1 to 20 $\mu$m, the cumulative volume particle diameter $D_{50}$ being measured according to a laser diffraction/scattering particle size distribution measurement method.

{7} The solid electrolyte as set forth in clause {5} or {6}, wherein the compound is represented by compositional formula $Li_aFe_dP_eM_{1-d-e}S_bX_c$ (in the formula, M is at least one element selected from germanium (Ge) element, antimony (Sb) element, silicon (Si) element, tin (Sn) element, aluminum (Al) element, titanium (Ti) element, nickel (Ni) element, cobalt (Co) element, and manganese (Mn) element; a is from 5.8 to 10.0; b is from 3.5 to 6.0; c is from 0.1 to 1.4; and d and e are each independently a number greater than 0 and less than 1 on condition that d+e is 1 or less).

{8} The solid electrolyte as set forth in any one of clauses {5} to {7}, wherein a content of the lithium element in the compound is from 10 to 25 mass%.

{9} An electrode mixture including:

the active material as set forth in any one of clauses {1} to {4}; and
a sulfide solid electrolyte.

{10} A battery comprising:

a positive electrode layer;
a negative electrode layer; and
a solid electrolyte layer disposed between the positive electrode layer
and the negative electrode layer, wherein

the positive electrode layer contains the active material as set forth in any one of clauses {1} to {4}.
{11} A battery comprising:

a positive electrode layer;
a negative electrode layer; and
a solid electrolyte layer between the positive electrode layer and the negative electrode layer, wherein

the solid electrolyte layer contains the solid electrolyte as set forth in any one of clauses {5} to {8}.

**Examples**

Hereinafter, the present invention will be described in greater detail using Examples. However, the scope of the present invention is not limited to the Examples below. Unless particularly stated otherwise, "%" and "parts" mean "mass%" and "parts by mass", respectively.

**Example 1**

To achieve the composition shown in Table 1 below, lithium sulfide ($Li_2S$) powder, phosphorus pentasulfide ($P_2S_5$) powder, ferrous sulfide (FeS) powder, and lithium chloride (LiCl) powder were used and were each measured such that the total amount was 2 g. Using a planetary ball mill (P-7 from Fritsch), the powders were mixed and ground at 500 rpm for 20 hours, to prepare a mixed powder.
The mixed powder was charged in a carbon-made container, which was heated at a temperature-rise rate of 200°C/h and fired at 500°C for 4 hours in a tubular electric furnace under circulation of hydrogen sulfide gas ($H_2S$; purity: 100%) at 1.0 L/min.
Then, the fired product was pulverized in a mortar, and further ground with a ball mill, and thereafter subjected to particle sizing using a sieve with a mesh opening of 53 $\mu$m, to obtain a powder-state iron-containing compound (solid electrolyte) having a particle diameter $D_{50}$ of 6.5 $\mu$m. From the results of XRD measurement, it was verified that the iron-containing compound (solid electrolyte) included a crystal phase having an argyrodite-type crystal structure.
For the electroconductive material, carbon nanotubes (VGCF-H (registered trademark) from Showa Denko K.K.) were used. The electroconductive material had a particle diameter $D_{50}$ of 0.04 $\mu$m. Then, 83.3 parts of the iron-containing compound and 16.7 parts of the electroconductive material were mixed and composited using a planetary ball mill (P-7 from Fritsch) at 500 rpm for 10 hours. Thereafter, the composite was pulverized in a mortar, and then subjected to particle sizing using a sieve with a mesh opening of 53 $\mu$m, to obtain particles of a positive electrode active material having a particle diameter $D_{50}$ of 3.2 $\mu$m.
All of the above operations were performed in a glovebox purged with sufficiently dried Ar gas (dew point: -60°C or lower).

**Examples 2 to 5**

Powders of respective iron-containing compounds (solid electrolytes) were obtained in the same manner as in Example 1, except that the material powders were mixed so as to achieve the respective compositions shown in Table 1. From the results of XRD measurement, it was verified that the respective iron-containing compounds obtained included a crystal phase having an argyrodite-type crystal structure. For the electroconductive material, Ketjen Black (registered trademark; also referred to hereinafter as "KB") EC300, an electroconductive carbon black from Lion Specialty Chemicals Co., Ltd., was used. 83.3 parts of the iron-containing compound and 16.7 parts of KB were used. Other than the above, particles of active materials were obtained in the same manner as in Example 1.

**Comparative Example 1**

In this Comparative Example, the compound shown in Table 1 was used instead of the aforementioned iron-containing compound. Other than the above, active material particles were obtained in the same manner as in Example 1.

Comparative Examples 2 to 5

Powders of respective iron-containing compounds were obtained in the same manner as in Example 2, except that the material powders were mixed so as to achieve the respective compositions shown in Table 1. Other than the above, active material particles were obtained in the same manner as in Example 2.

**XRD Measurement**

The active materials obtained in the Examples and Comparative Examples were each packed in a non-exposed, airtight holder in a glovebox purged with sufficiently dried Ar gas (dew point: -60°C or lower), and subjected to XRD measurements. The measurement conditions were as follows.

The iron-containing compounds were subjected to XRD measurements under the same measurement conditions.

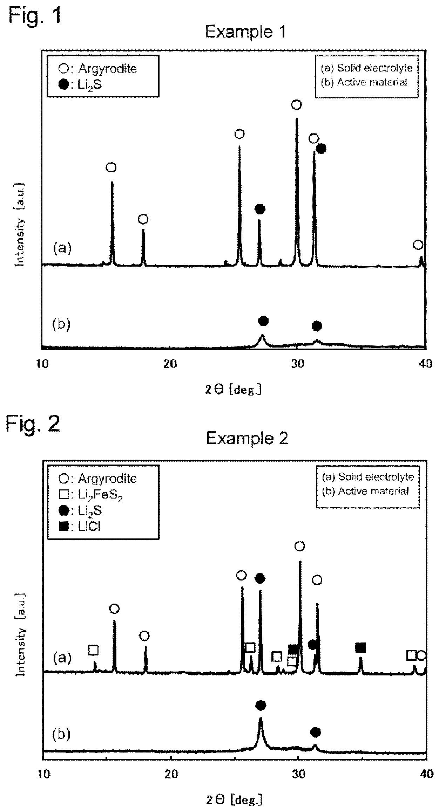

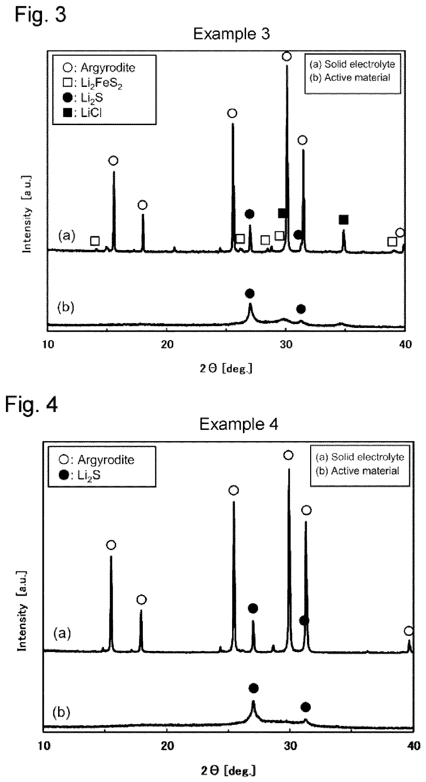

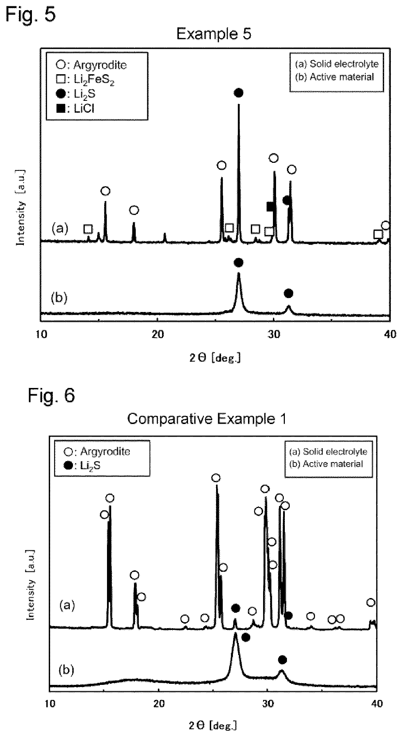

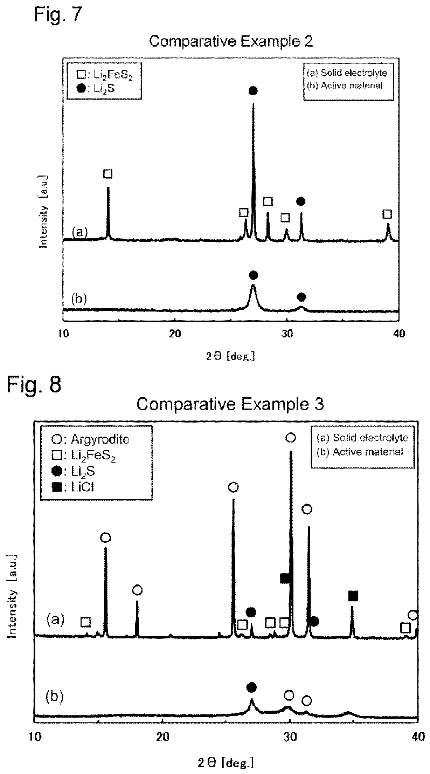

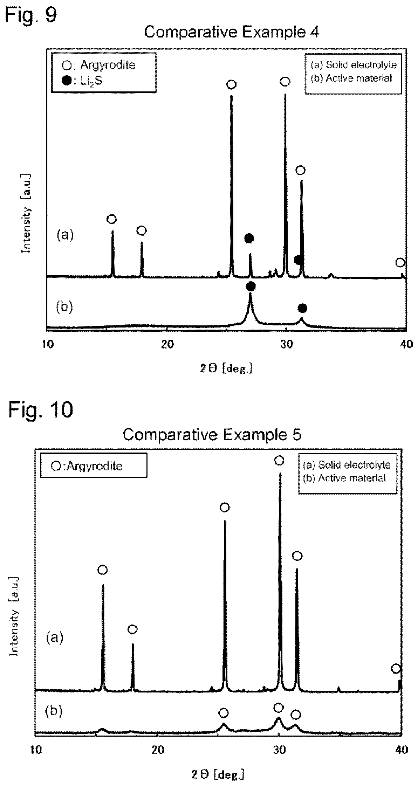

Figs. 1 to 10 show XRD charts for the respective active materials and iron-containing compounds. Table 1 shows the names of substances exhibiting the XRD peaks. In Figs. 1 to 10, the XRD charts indicated by sign (a) are for the iron-containing compounds, and the XRD charts indicated by sign (b) are for the active materials.

- Device name: Fully automatic multi-purpose X-ray diffractometer SmartLab SE (from Rigaku Corporation)
- Radiation source: Cu K$\alpha$1
- Tube voltage: 40 kV
- Tube current: 50 mA
- Measurement method: Concentration method (reflection method)
- Optical system: Multilayer mirror divergent beam method (CBO-$\alpha$)
- Detector: One-dimensional semiconductor detector
- Incident solar slit: Solar slit 2.5°
- Length limiting slit: 10 mm
- Light-receiving solar slit: 2.5°
- Incident slit: 1/6°
- Light-receiving slit: 2 mm (open)
- Measurement range: 2$\theta$ = 10 to 120°
- Step width: 0.02°
- Scanning speed: 1.0°/min

Further, solid-state battery cells were produced using the respective active materials produced in the Examples and Comparative Examples as positive electrode active materials, and their initial discharge capacity was measured according to the method below. The results are shown in Table 1.

**Production of Solid-State Battery Cell**

Solid-state batteries were produced using: the respective active materials produced in the Examples and Comparative Examples as positive electrode active materials; $Li_{5.4}PS_{4.4}Cl_{0.8}Br_{0.8}$ having an argyrodite-type crystal structure as solid electrolyte powder to be used in the positive electrode layer and the solid electrolyte layer; and In-Li as a negative electrode active material of the negative electrode layer.

**Preparation of Positive Electrode Mixture:**

Positive electrode mixtures for the positive electrode layer were prepared by mixing, in a mortar, the respective active material powder obtained in the Examples and Comparative Examples and the solid electrolyte powder at a mass ratio of 60:40.

**Production of Solid-State Battery Cell:**

In a polypropylene-made cylinder (opening diameter: 10.5 mm; height: 18 mm) having both top and bottom sides open, the cylinder's bottom opening was closed off with a negative electrode (stainless steel-made), and solid electrolyte powder was placed thereon and further closed off with a positive electrode (stainless-steel made). The stack was then uniaxially pressed at 200 MPa, to form a solid electrolyte layer. Next, the positive electrode was temporarily removed, and a positive electrode mixture was placed on the solid electrolyte layer and again closed off with the positive electrode, followed by uniaxial pressing at 560 MPa, to laminate the positive electrode layer and the solid electrolyte layer. Thereafter, the cylinder was flipped over, and the negative electrode was temporarily removed, and In-Li foil was placed on the solid electrolyte layer and again closed off with the negative electrode. Finally, the positive and negative electrodes were clamped together with a C-clamp at a load of 6 N·m, to produce a solid-state battery cell, wherein the positive electrode layer, the solid electrolyte layer, and the negative electrode layer were stacked. As regards the thickness of the layers, the positive electrode layer was approximately 40 $\mu$m, the solid electrolyte layer was approximately 600 $\mu$m, and the negative electrode layer was approximately 400 $\mu$m. The solid-state battery cell was produced in a glovebox purged with argon gas (dew-point temperature: -60°C). The produced solid-state battery was connected to a charge/discharge measurement device in an environmental test chamber kept at 25°C, to evaluate battery properties. Note that a current of 2.0 mA during charge/discharge was defined as the 1C rate.

**Initial Discharge Capacity**

In the initial charge/discharge (first cycle), with the aim of allowing lithium ions contained in the positive electrode active material to be stored/released efficiently, charging was performed at 0.03C using the CC-CV method up to 3.0 V, and discharging was performed at 0.03C using the CC method down to 0.38 V. In the second cycle, charging was performed at 0.1C using the CC-CV method up to 3.0 V, and discharging was performed at 0.1C using the CC method down to 0.38 V. The charge/discharge capacity in the second cycle was defined as the initial discharge capacity.

**5C/0.1C Discharge Retention (%)**

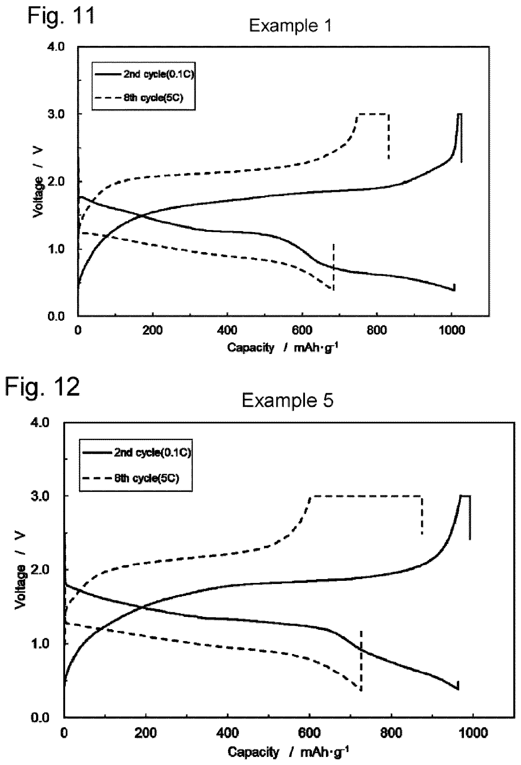

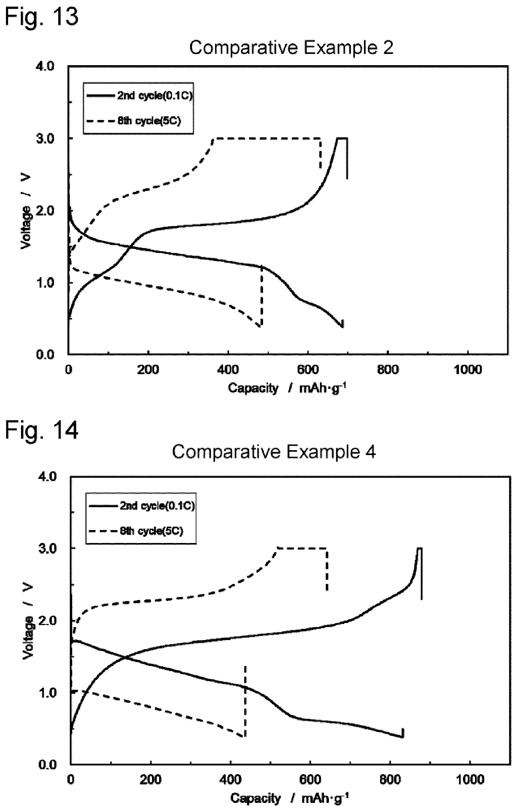

The same methods as in the measurement for the initial discharge capacity were employed, and charging/-discharging in the third cycle was performed at 0.1C, and from the fourth cycle onward, charging/discharging was performed at the following rates: 0.2C (fourth cycle), 0.5C (fifth cycle), 1C (sixth cycle), 2C (seventh cycle), and 5C (eighth cycle). The "5C/0.1C discharge retention" is defined as the ratio of the 5C discharge capacity (eighth cycle) to the discharge capacity (0.1C) in the second cycle being defined as 100%. Figs. 11 to 14 show charge-discharge curves of batteries respectively using the active materials produced in Examples 1 and 5 and Comparative Examples 2 and 4.

Next, according to the method described below, the lithium-ion conductivity of the respective iron-containing solid electrolytes (iron-containing compounds) obtained in the Examples and Comparative Examples was measured. The results are also shown in Table 1.

**Measurement of Lithium-Ion Conductivity of Iron-Containing Solid Electrolyte**

The respective iron-containing solid electrolyte powders obtained in the Examples and Comparative Examples were molded by uniaxial pressurization by applying a load of approximately 6 t/cm$^2$ in a glovebox purged with sufficiently dried Ar gas (dew point: -60°C or lower), to produce samples for measuring lithium-ion conductivity, consisting of pellets with a diameter of 10 mm and a thickness of approximately 1 to 8 mm. Lithium-ion conductivity was measured using Solartron 1255B Electrochemical Test System (1280C) and Impedance/Gain-Phase Analyzer (SI 1260) from Solartron Analytical. The AC impedance method was performed under the following measurement conditions: temperature: 25°C; frequency: 100 Hz to 1 MHz; amplitude: 100 mV.

[Table 1]

|  |  | Example 1 | Example 2 | Example 3 | Example 4 | Example 5 |
|---|---|---|---|---|---|---|
|  |  | $Li_{7.1}Fe_{0.1}P_{0.9}S_{5.8}Cl_{0.2}$ | $Li_{7.0}Fe_{0.4}P_{0.6}S_{4.8}Cl_{1.2}$ | $Li_{6.2}Fe_{0.3}P_{0.8}S_{4.6}Cl_{1.4}$ | $Li_{6.3}Fe_{0.1}P_{0.9}S_{5.6}Cl_{0.5}Br_{0.5}$ | $Li_{8.0}Fe_{0.4}P_{0.6}S_{5.8}Cl_{0.2}$ |
| Iron-containing compound | (1) Li/(Fe+P) | 7.1 | 7.0 | 6.2 | 6.3 | 8.0 |
|  | (2) X/(Fe+P) | 0.2 | 1.2 | 1.4 | 1.0 | 0.2 |
|  | (3) X+Fe | 0.3 | 1.6 | 1.6 | 1.1 | 0.6 |
|  | (4) Fe/(Fe−P) | 0.1 | 0.4 | 0.2 | 0.1 | 0.4 |
| Electroconductive material |  | VGCF | KB | KB | KB | KB |
| Product phase (XRD) | Solid electrolyte | Argyrodite $Li_2S$ | Argyrodite $Li_2S$, $Li_2FeS_2$ | Argyrodite $Li_2S$, $Li_2FeS_2$ | Argyrodite $Li_2S$ | Argyrodite $Li_2S$, $Li_2FeS_2$ |
|  | Active material | $Li_2S$ | $Li_2S$ | $Li_2S$ | $Li_2S$ | $Li_2S$ |
| Lithium-ion conductivity of solid electrolyte (S/cm) |  | $4.3 \times 10^{-4}$ | $3.3 \times 10^{-4}$ | $1.1 \times 10^{-4}$ | $1.3 \times 10^{-4}$ | $1.0 \times 10^{-4}$ |
| Battery properties | Initial discharge capacity (mAh/g) | 1007.8 | 822.8 | 720.3 | 749.6 | 964.1 |
|  | 5C/0.1C discharge retention (%) | 67.8 | 67.8 | 68.4 | 60.0 | 75.1 |

|  |  | Comparative Example 1 | Comparative Example 2 | Comparative Example 3 | Comparative Example 4 | Comparative Example 5 |
|---|---|---|---|---|---|---|
|  |  | $Li_{7.0}PS_{6.0}$ | $Li_{10.4}Fe_{1.2}S_{6.3}Cl_{0.2}$ | $Li_{5.7}Fe_{0.1}P_{0.9}S_{5.4}Cl_{1.6}$ | $Li_{7.0}Al_{0.1}P_{0.9}S_{5.8}Cl_{0.2}$ | $Li_{5.8}PS_{4.8}Cl_{1.2}$ |
| Iron-containing compound | (1) Li/(Fe+P) | 7.0 | 8.7 | 5.7 | 7.8 | 5.8 |
|  | (2) X/(Fe+P) | 0 | 0.2 | 1.6 | 0.2 | 1.2 |
|  | (3) X+Fe | 0 | 1.4 | 1.7 | - | 1.2 |
|  | (4) Fe/(Fe−P) | 0 | 1.0 | 0.1 | - | 0 |
| Electroconductive material |  | VGCF | KB | KB | KB | KB |
| Product phase (XRD) | Solid electrolyte | Argyrodite $Li_2S$ | $Li_2S$, $Li_2FeS_2$ | Argyrodite $Li_2S$, $Li_2FeS_2$ | Argyrodite $Li_2S$ | Argyrodite |
|  | Active material | $Li_2S$ | $Li_2S$ | $Li_2S$ | $Li_2S$ | Argyrodite |
| Lithium-ion conductivity of solid electrolyte (S/cm) |  | $1.4 \times 10^{-5}$ | Unmeasurable | $6.8 \times 10^{-4}$ | $6.1 \times 10^{-4}$ | $2.5 \times 10^{-3}$ |
| Battery properties | Initial discharge capacity (mAh/g) | 769.9 | 687.0 | 724.3 | 831.4 | 586.2 |
|  | 5C/0.1C discharge retention (%) | 15.0 | 70.0 | 57.5 | 51.3 | 57.4 |

The results of Table 1 show that the batteries using the respective active materials produced in the Examples as positive electrode active materials successfully achieved both initial discharge capacity and 5C/0.1C discharge retention.

The iron-containing solid electrolytes produced in the Examples had high lithium-ion conductivity of $1 \times 10^{-4}$ S/cm or higher. Since the iron-containing solid electrolytes produced in the Examples were provided with electron conduction properties in their entirety, their use, particularly in the positive electrode layer, can enhance both lithium-ion conduction properties and electron conduction properties of the entire positive electrode layer, thereby achieving excellent battery properties.

## Industrial Applicability

As described in detail above, the active material and the solid electrolyte of the present invention can improve the performance of lithium-ion batteries.

## Claims

1. An active material comprising:

a compound; and
an electroconductive material, wherein
the compound contains a lithium (Li) element, a sulfur (S) element, a phosphorus (P) element, an iron (Fe) element, and a halogen (X) element,
the compound has a peak at positions $2\theta = 27.1° \pm 0.5°$ and $31.4° \pm 0.5°$ in an X-ray diffraction pattern measured with an X-ray diffractometer using Cu Kα1 radiation, and
the active material satisfies relationships (1), (2), (3) and (4) shown below:

$$(1)\ 5.8 \leq Li/(Fe+P) \leq 10.0$$

$$(2)\ 0.1 \leq X/(Fe+P) \leq 1.4$$

$$(3)\ 0.2 \leq X+Fe \leq 2.0$$

$$(4)\ 0.0 < Fe/(Fe+P) < 1.0$$

wherein

(1) defines a molar ratio of the lithium (Li) element to a sum of the iron (Fe) element and the phosphorus (P) element,
(2) defines a molar ratio of the halogen (X) element to the sum of the iron (Fe) element and the phosphorus (P) element,
(3) defines a sum of mole numbers of the halogen (X) element and the iron (Fe) element, and
(4) defines a molar ratio of the iron (Fe) element to the sum of the iron (Fe) element and the phosphorus (P) element.

2. The active material according to claim 1, wherein the compound and the electroconductive material are composited.

3. The active material according to claim 1 or 2, comprising from 1 to 50 parts by mass of the electroconductive material with respect to 100 parts by mass of the compound.

4. The active material according to claim 1 or 2, wherein the electroconductive material is at least one selected from carbon materials and metal materials.

5. A solid electrolyte comprising:
a compound containing a lithium (Li) element, a sulfur (S) element, a phosphorus (P) element, an iron (Fe) element, and a halogen (X) element, wherein

the solid electrolyte satisfies relationships (1), (2), (3) and (4) shown below:

$$(1)\ 5.8 \leq Li/(Fe+P) \leq 10.0$$

$$(2)\ 0.1 \leq X/(Fe+P) \leq 1.4$$

$$(3)\ 0.2 \leq X+Fe \leq 2.0$$

$$(4)\ 0.0 < Fe/(Fe+P) < 1.0$$

wherein

(1) defines a molar ratio of the lithium (Li) element to a sum of the iron (Fe) element and the phosphorus (P) element,
(2) defines a molar ratio of the halogen (X) element to the sum of the iron (Fe) element and the phosphorus (P) element,
(3) defines a sum of mole numbers of the halogen (X) element and the iron (Fe) element, and
(4) defines a molar ratio of the iron (Fe) element to the sum of the iron (Fe) element and the phosphorus (P) element.

6. The solid electrolyte according to claim 5, wherein the compound has a cumulative volume particle diameter $D_{50}$ at a cumulative volume of 50 vol% of from 0.1 to 20 $\mu$m, the cumulative volume particle diameter $D_{50}$ being measured according to a laser diffraction/scattering particle size distribution measurement method.

7. The solid electrolyte according to claim 5 or 6, wherein the compound is represented by compositional formula $Li_aFe_dP_eM_{1-d-e}S_bX_c$ (in the formula, M is at least one element selected from germanium (Ge) element, antimony (Sb) element, silicon (Si) element, tin (Sn) element, aluminum (Al) element, titanium (Ti) element, nickel (Ni) element, cobalt (Co) element, and manganese (Mn) element; a is from 5.8 to 10.0; b is from 3.5 to 6.0; c is from 0.1 to 1.4; and d and e are each independently a number greater than 0 and less than 1 on condition that d+e is 1 or less).

8. The solid electrolyte according to claim 5 or 6, wherein a content of the lithium element in the compound is from 10 to 25 mass%.

9. An electrode mixture comprising:

the active material according to claim 1 or 2; and
a sulfide solid electrolyte.

10. A battery comprising:

a positive electrode layer;
a negative electrode layer; and
a solid electrolyte layer disposed between the positive electrode layer
and the negative electrode layer, wherein

the positive electrode layer comprises the active material according to claim 1 or 2.

11. A battery comprising:

a positive electrode layer;
a negative electrode layer; and
a solid electrolyte layer between the positive electrode layer and the negative electrode layer, wherein

the solid electrolyte layer comprises the solid electrolyte according to claim 5.

EP 4 664 560 A1

# Fig. 1

## Example 1

# Fig. 2

## Example 2

## Fig. 3

### Example 3

## Fig. 4

### Example 4

## Fig. 5

Example 5

## Fig. 6

Comparative Example 1

Fig. 7

Comparative Example 2

Fig. 8

Comparative Example 3

Fig. 9

Comparative Example 4

Fig. 10

Comparative Example 5

## Fig. 11

Example 1

## Fig. 12

Example 5

Fig. 13

Comparative Example 2

Fig. 14

Comparative Example 4

## INTERNATIONAL SEARCH REPORT

| International application No. |
| --- |
| **PCT/JP2024/003905** |

### A. CLASSIFICATION OF SUBJECT MATTER

*H01M 4/58*(2010.01)i; *H01B 1/06*(2006.01)i; *H01B 1/10*(2006.01)i; *H01M 4/136*(2010.01)i; *H01M 4/36*(2006.01)i; *H01M 4/62*(2006.01)i; *H01M 6/18*(2006.01)i; *H01M 10/052*(2010.01)i; *H01M 10/0562*(2010.01)i

FI: H01M4/58; H01B1/06 A; H01B1/10; H01M4/136; H01M4/36 A; H01M4/62 Z; H01M6/18 A; H01M10/052; H01M10/0562

According to International Patent Classification (IPC) or to both national classification and IPC

### B. FIELDS SEARCHED

Minimum documentation searched (classification system followed by classification symbols)

H01M4/58; H01B1/06; H01B1/10; H01M4/136; H01M4/36; H01M4/62; H01M6/18; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | US 2021/0143468 A1 (SAMSUNG SDI CO., LTD.) 13 May 2021 (2021-05-13) claims 1, 14, paragraphs [0075], [0093] | 5-6, 8, 11 |
| A | | 1-4, 7, 9-10 |
| A | JP 2020-522091 A (SION POWER CORPORATION) 27 July 2020 (2020-07-27) claims 1, 3, 44-45, fig. 7-10 | 1-11 |
| A | WO 2022/045302 A1 (MITSUI MINING & SMELTING CO., LTD.) 03 March 2022 (2022-03-03) claims 1, 7, 10, table 1, fig. 8 | 1-11 |
| P, X | WO 2023/163071 A1 (MITSUI MINING & SMELTING CO., LTD.) 31 August 2023 (2023-08-31) paragraph [0024], table 1, example 2, fig. 2 | 1-11 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **12 April 2024** | **23 April 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

| Patent document cited in search report | Publication date (day/month/year) | Patent family member(s) | Publication date (day/month/year) |
|---|---|---|---|
| US 2021/0143468 A1 | 13 May 2021 | EP 3819964 A1<br>KR 10-2021-0055581 A<br>CN 112786952 A | |
| JP 2020-522091 A | 27 July 2020 | US 2018/0351148 A1<br>claims 1, 3, paragraph [0096], fig. 7-10<br>WO 2018/218057 A2<br>KR 10-2020-0000849 A<br>CN 110785885 A | |
| WO 2022/045302 A1 | 03 March 2022 | US 2023/0278881 A1<br>claims 1, 7, 10, table 1, fig. 8<br>EP 4206124 A1<br>CN 116057009 A<br>KR 10-2023-0057346 A | |
| WO 2023/163071 A1 | 31 August 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022045302 A
- WO 2013099834 A
- WO 2015001818 A